# EUROPEAN PATENT APPLICATION

(11) **EP 4 764 761 A1**
(43) Date of publication of application: **24.06.2026**
(21) Application number: 24222379.0
(22) Date of filing: 20.12.2024
(51) Int. Cl.: G05D 1/241

(54) **ASSISTED DOCKING BASED ON A SNAP-IN DOCKING DISTANCE**

(71) Applicant: Volvo Penta Corporation, 405 08 Göteborg (SE)
(72) Inventor: RYDSTRÖM, Mats, BILLDAL (SE)
(74) Representative: Ström & Gulliksson AB

(57) **Abstract**

A computer system (100; 700) comprising processing circuitry (102; 702) configured to: obtain environment data (20) and monitor a snap-in docking distance (40) in relation to a fixed structure (10) based on the environment data (20); in response to the marine vessel (1) being outside the distance (40): control movement (22) of the marine vessel (1) based on a maneuvering request (24) and/or the environment data (20); and in response to the marine vessel (1) being within the distance (40): control the marine vessel (1) to move into physical engagement with the fixed structure (10); obtain force sensing data (25) indicating an engagement pressure between the marine vessel (1) and the fixed structure (10); and regulate a thrust force (60) in a direction towards said the fixed structure (10) based on said force sensing data (25) to control a desired engagement pressure.

## Description

### TECHNICAL FIELD

The disclosure generally relates to computer-implemented methods and control units for assisted docking of marine vessels. In particular aspects, the disclosure relates to assisted docking based on a snap-in docking distance. The disclosure can be applied to marine vessels, such as leisure boats, ships, cruise ships, fishing vessels, yachts, ferries, among other vehicle types. Although the disclosure may be described with respect to a particular marine vessel, the disclosure is not restricted to any particular marine vessel.

### BACKGROUND

Assisted docking refers to computer-implemented approaches for assisting an operator of a marine vessel in docking the vessel, i.e., maneuvering the vessel up against a quay or the like.

In the field of assisted docking for marine vessels, traditional systems often rely on buffer distances to maintain a safety margin between a marine vessel and a fixed structure such as a quay or jetty adjacent to which docking is intended. One such example is disclosed in EP 3 666 637 B1. These buffer distances are intended to prevent collisions by ensuring that vessels do not come into physical contact with docking structures. Such systems typically employ sensors or automated controls to monitor and maintain this safety distance, allowing the vessel to remain stationary relative to the fixed structure without direct contact.

However, while effective in reducing the risk of collision, these systems can limit docking efficiency, precision and safety, for example in situations where strong currents or winds are present. This could potentially complicate the docking process and require additional maneuvering efforts by crew members.

### SUMMARY

The present disclosure addresses the limitations associated with the traditional use of buffer distances in assisted docking for marine vessels. The inventor has identified that while buffer distances act as a precautionary measure to avoid physical contact with fixed structures, they can hinder docking precision, safety, and efficiency.

By incorporating the use of pressure sensors, the approaches described herein enable precise control over the engagement pressure between the vessel and the fixed structure adjacent to which the marine vessel intends to dock. This eliminates the need for maintaining a buffer distance, facilitating a more controlled and direct interaction with the fixed structure. The pressure sensors provide real-time feedback on the engagement pressure, which allows the system to dynamically regulate the thrust force to achieve a stable and secure docking position. Furthermore, the system employs a snap-in docking distance to determine when the vessel is in sufficient proximity to the fixed structure, allowing for automatic control to move the vessel into engagement with the fixed structure and regulate the contact pressure between the vessel and the fixed structure, ensuring a smooth and efficient docking process. In other words, when the vessel enters within the snap-in distance of the fixed structure, the control system automatically moves the vessel into engagement with the fixed structure in a "snap-in" manner.

In a first aspect of the disclosure there is accordingly provided a computer system for assisted docking of a marine vessel, the computer system comprising processing circuitry configured to: obtain environment data of the marine vessel in relation to at least one fixed structure; monitor a snap-in docking distance in relation to said at least one fixed structure based on the environment data; in response to the marine vessel being outside the monitored snap-in docking distance: control movement of the marine vessel based on one or more of (i) at least one maneuvering request received from a user operating the marine vessel, and (ii) the environment data; and in response to the marine vessel being within the monitored snap-in docking distance: automatically control the marine vessel to move into physical engagement with the at least one fixed structure, obtain force sensing data from a pressure sensor in response to said physical engagement, the force sensing data indicating an engagement pressure between the marine vessel and said at least one fixed structure, and regulate a thrust force in a direction towards said at least one fixed structure based on said force sensing data to control a desired engagement pressure of the marine vessel against said at least one fixed structure.

The first aspect of the disclosure may seek to improve docking precision and safety by eliminating reliance on buffer distances. A technical benefit may include enhanced docking efficiency and control by dynamically adjusting thrust based on real-time engagement pressure, surpassing the limitations of traditional buffer distance methods. In some scenarios, such as when wind, waves, and/or current is strong it may be difficult or even impossible to maintain a buffer distance between the vessel and the fixed structure. Physically engaging the fixed structure in a controlled manner is then preferred.

Optionally in some examples, including in at least one preferred example, the processing circuitry is further configured to obtain contour data of said at least one fixed structure, and the processing circuitry is configured to regulate the thrust force by controlling an automatic alignment of the marine vessel in relation to said contour data of said at least one fixed structure. A technical benefit may include enhanced docking accuracy through precise alignment with the structure's contours.

Optionally in some examples, including in at least one preferred example, the contour data is obtained from one or more of a distance sensor and an environment chart. A technical benefit may include improved adaptability by utilizing multiple data sources to inform docking decisions.

Optionally in some examples, including in at least one preferred example, the processing circuitry is further configured to obtain an alignment request from a user, the alignment request indicating a desired alignment of the marine vessel in relation to the contour data of said at least one fixed structure; and control the automatic alignment based on the alignment request. A technical benefit may include increased user control, allowing for personalized docking preferences.

Optionally in some examples, including in at least one preferred example, the snap-in docking distance is a user-configurable value. A technical benefit may include flexibility in docking operations, allowing adjustments based on specific environmental and operational conditions.

Optionally in some examples, including in at least one preferred example, the snap-in docking distance is a fixed predetermined value. A technical benefit may include consistency and simplicity in docking procedures.

Optionally in some examples, including in at least one preferred example, the processing circuitry is further configured to obtain spatial surroundings data pertaining to a docking area where the marine vessel is located, the docking area involving said at least one fixed structure; process the spatial surroundings data to identify at least one unoccupied docking location adjacent said at least one fixed structure; and select said at least one fixed structure for docking based on the unoccupied docking location. A technical benefit may include improved docking efficiency by dynamically identifying and selecting available docking spots.

Optionally in some examples, including in at least one preferred example, the processing circuitry is further configured to obtain classification data of said at least one fixed structure; obtain vessel property data of the marine vessel; determine a suitability index for the marine vessel to dock by comparing the vessel property data and the classification data; and control the regulation of the thrust force based on said suitability index. A technical benefit may include enhanced docking safety by tailoring docking procedures to the specific characteristics of the vessel and structure.

Optionally in some examples, including in at least one preferred example, controlling the regulation of the thrust force based on said suitability index comprises reducing the thrust force for relatively lower suitability indexes, and increasing the thrust force for relatively greater suitability indexes. A technical benefit may include improved docking precision and safety by adjusting thrust force to match docking conditions.

Optionally in some examples, including in at least one preferred example, the processing circuitry is further configured to obtain an engagement pressure request from a user, the engagement pressure request indicating a desired engagement pressure for the marine vessel against said at least one fixed structure; and regulate the thrust force based on the engagement pressure request. A technical benefit may include increased user customization, allowing for specific pressure preferences during docking.

Optionally in some examples, including in at least one preferred example, the processing circuitry is further configured to cause control of a contact indicator to emit an alert cue in response to said force sensing data being obtained from the pressure sensor. A technical benefit may include enhanced situational awareness by providing immediate feedback on docking status.

Optionally in some examples, including in at least one preferred example, the alert cue is one or more of a visual cue, an auditory cue, or a haptic cue. A technical benefit may include improved communication of docking status through multiple sensory channels.

Optionally in some examples, including in at least one preferred example, the at least one maneuvering request involves one or more of a throttle request and a steering request. A technical benefit may include precise control over vessel movement, enhancing docking maneuverability.

In a second aspect of the disclosure there is provided a marine vessel comprising the computer system of the first aspect; a propulsion system adapted to propel the marine vessel based on control signals from said computer system; and a pressure sensor configured to obtain force sensing data, wherein the pressure sensor is arranged along at least a portion of an outer periphery of a hull of the marine vessel.

The second aspect of the disclosure may seek to improve docking precision and safety by eliminating reliance on buffer distances. A technical benefit may include enhanced docking efficiency and control by dynamically adjusting thrust based on real-time engagement pressure, surpassing the limitations of traditional buffer distance methods.

Optionally in some examples, including in at least one preferred example, the pressure sensor is an anti-pinch strip. A technical benefit may include enhanced safety by providing sensitive detection of contact and pressure changes during docking.

Optionally in some examples, including in at least one preferred example, the anti-pinch strip is arranged circumferentially around said at least a portion of the hull. A technical benefit may include comprehensive coverage for detecting engagement pressure from multiple angles, improving docking precision.

Optionally in some examples, including in at least one preferred example, further comprising one or more of a positioning sensor and a distance sensor configured to obtain environment data. A technical benefit may include improved environmental awareness by integrating multiple data sources to support accurate navigation and docking decisions.

In a third aspect of the disclosure there is provided a computer-implemented method for assisted docking of a marine vessel, the method comprising: obtaining, by processing circuitry of a computer system, environment data of the marine vessel in relation to at least one fixed structure; monitoring, by the processing circuitry, a snap-in docking distance in relation to said at least one fixed structure based on the environment data; in response to the marine vessel being outside the monitored snap-in docking distance: controlling, by the processing circuitry, movement of the marine vessel based on one or more of (i) at least one maneuvering request received from a user operating the marine vessel, and (ii) the environment data; and in response to the marine vessel being within the monitored snap-in docking distance: controlling, by the processing circuitry, the marine vessel to move into physical engagement with said at least one fixed structure, obtaining, by the processing circuitry, force sensing data from a pressure sensor in response to said physical engagement, the force sensing data indicating an engagement pressure between the marine vessel and said at least one fixed structure, and regulating, by the processing circuitry, a thrust force in a direction towards said at least one fixed structure based on said force sensing data to control a desired engagement pressure of the marine vessel against said at least one fixed structure.

The third aspect of the disclosure may seek to improve docking precision and safety by eliminating reliance on buffer distances. A technical benefit may include enhanced docking efficiency and control by dynamically adjusting thrust based on real-time engagement pressure, surpassing the limitations of traditional buffer distance methods.

In a fourth aspect of the disclosure there is provided a computer program product comprising program code for performing, when executed by the processing circuitry, the method of the third aspect.

The fourth aspect of the disclosure may seek to enable new marine vessels and/or legacy marine vessels to be conveniently configured, by software installation/update, to improve docking precision and safety by eliminating reliance on buffer distances. A technical benefit may include enhanced docking efficiency and control by dynamically adjusting thrust based on real-time engagement pressure, surpassing the limitations of traditional buffer distance methods.

In a fifth aspect of the disclosure there is provided a non-transitory computer-readable storage medium comprising instructions, which when executed by the processing circuitry, cause the processing circuitry to perform the method of the third aspect.

The fifth aspect of the disclosure may seek to enable new marine vessels and/or legacy marine vessels to be conveniently configured, by software installation/update, to improve docking precision and safety by eliminating reliance on buffer distances. A technical benefit may include enhanced docking efficiency and control by dynamically adjusting thrust based on real-time engagement pressure, surpassing the limitations of traditional buffer distance methods.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary marine vessel in a schematic top view according to an example.
**FIG. 2A** is an exemplary marine vessel in a schematic perspective view according to an example having an anti-pinch strip as pressure sensor.
**FIG. 2B** is an exemplary marine vessel in a schematic perspective view according to an example having a set of fenders as pressure sensor.
**FIG. 3** shows data that is inputted to, data that is outputted from, and data that is assessed by, processing circuitry of a computer system according to an example.
**FIG. 4A** is an exemplary illustration of a marine vessel entering a docking area to find a docking location adjacent to a fixed structure where the marine vessel intends to dock, according to an example.
**FIG. 4B** is a continuation example of **FIG. 4A** where the marine vessel approaches the docking location.
**FIG. 4C** is a continuation example of **FIG. 4B** where the marine vessel breaches a snap-in distance from the fixed structure, where orientation alignment is carried out.
**FIG. 4D** is a continuation example of **FIG. 4C** where the marine vessel is controlled to enter into physical engagement with the fixed structure.
**FIG. 4E** is a continuation example of **FIG. 4D** where a thrust is regulated in a distance towards the fixed structure.
**FIG. 5** is another continuation example of **FIG.** 4D, where a thrust is regulated in a distance towards the fixed structure using an alternative approach.
**FIG. 6** is a flowchart of an exemplary method to for assisted docking of a marine vessel according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

This disclosure addresses the inherent limitations of traditional marine vessel assisted docking systems, which predominantly rely on maintaining buffer distances to prevent physical contact with fixed structures, such as quays. These traditional techniques implement what may be seen as a virtual bumper which prevents the vessel from coming into physical contact with a fixed structure such as a quay, jetty or the like. While these buffer distances can reduce collision risks, and mitigate risks of damaging the vessel, they may also compromise the precision, safety, and efficiency of the docking process, at least in some scenarios. This is due to the fact that the vessel is controlled to deliberately hold a certain safety distance from a docking structure, which may be challenging or even impossible in certain scenarios, such as in strong winds and current. By eliminating the reliance on buffer distances, the approaches described herein may enable vessels to dock with greater accuracy, reliability, and safety.

The concepts introduced herein employ two control behaviors that are conditioned on the positional data of the marine vessel in relation to a snap-in docking distance. A snap-in distance is a Euclidean distance measured from the vessel to a fixed structure suitable for docking against. The snap-in distance can be determined in, e.g., meters or feet. A snap-in distance may be determined in a number of ways. It may be determined as the shortest distance from a point on the vessel to a point on a fixed structure suitable for docking the vessel against. The snap-in distance may also be determined as the perimeter of a region which extends a given distance out from a fixed structure suitable for docking. The snap-in distance may be on the order of a meter or so, such as between 0,5m and 2m.

When the marine vessel is outside this snap-in distance, it is controlled to operate by maintaining standard maneuvering and/or positioning without automatically engaging any fixed structure. When the marine vessel is within the snap-in distance, it is deliberately controlled such as to enter into physical engagement with the fixed structure, operating based on force pressure data obtained from one or more pressure sensors arranged on the vessel. By continuously monitoring the engagement pressure between the vessel and the fixed structure, dynamic regulation of the thrust force to maintain a desired engagement pressure can be performed, ensuring that the vessel maintains a consistent and safe level of contact with the fixed structure. Engagement pressure may be defined in several different ways, e.g., as the normal force generated by the vessel against the fixed structure, as an air pressure in an air-filled fender or anti-pinch strip, or simply as a value on a given scale from say 1-10, where 1 is a small pressure and 10 is a large pressure. Additionally, engagement pressure can be expressed in standard units of measurement such as force per unit area, e.g., newtons per unit area (N/m²) or pounds per square inch (psi).

This contact-based approach allows for precise control over the docking process, eliminating the need for arbitrary buffer distances while preventing the vessel from exerting excessive force on the fixed structure, thereby avoiding damage.

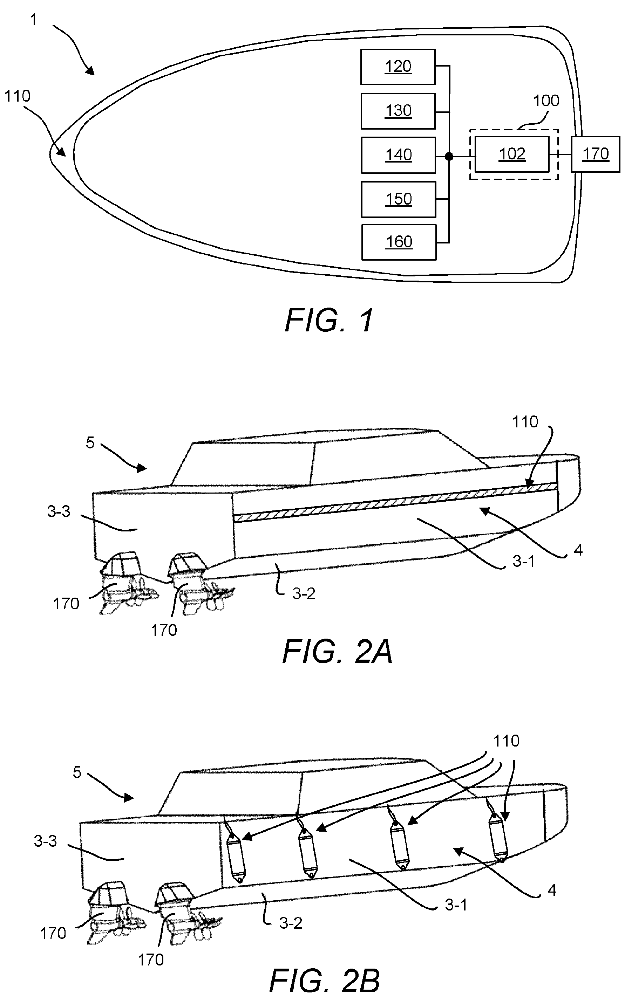

**FIG. 1** is an exemplary marine vessel **1** where aspects and examples described herein can be applied. In non-limiting examples, the marine vessel **1** is a leisure boat, ship, cruise ship, fishing vessel, yacht, ferry, or the like. The marine vessel **1** is adapted to operate at bodies of water, e.g., a sea, ocean, lake, river, bay, gulf, strait, channel, reservoir, fjord, marsh, swamp, etc. The marine vessel **1** may be an electric marine vessel, gasoline-powered marine vessel, diesel-powered marine vessel, or the like.

The marine vessel **1** is controlled to be docked adjacent to at least one fixed structure. In this context, "adjacent to" means that the marine vessel **1** is positioned next to or near the physical structure for docking. This refers to a stable and direct physical engagement or contact, where the marine vessel **1** is close enough to facilitate docking operations, such as loading, unloading, or securing the vessel.

A physical structure encompasses any tangible object that the marine vessel **1** may encounter during docking or navigation. These fixed structures come in various forms, materials, and levels of mobility. For instance, a quay is a solid platform along a waterfront used for loading and unloading vessels. Similarly, a berth is a designated location within a port where vessels are moored. Bridges, which span bodies of water, provide passage over obstacles, while other vessels-whether stationary or moving-also qualify as physical structures. Docks serve as platforms for mooring vessels and often include facilities for loading and unloading. Piers are raised structures extending into the water, supported by pillars, and jetties extend into the water to influence currents or protect harbors. Buoys float to mark channels, hazards, or mooring locations, and wharves are built along shores to facilitate the loading and unloading of ships. Harbor walls act as protective barriers against waves, and slipways are ramps that allow ships to move to and from the water. Floating docks support vessels during maintenance, while marinas offer secure moorings and facilities for leisure boats. Breakwaters protect coasts or harbors from waves, and mooring buoys provide mooring points in open water. These structures may be constructed from materials like concrete, steel, stone, wood, or composites, each presenting unique docking challenges.

It should be understood that the marine vessel **1** can dock alongside "at least one" fixed structure. The size of the marine vessel **1** relative to the structure plays a role; a larger vessel might require docking alongside multiple sections of a structure, each considered a distinct fixed structure. Additionally, a docking area could comprise several sections or components, such as different parts of a quay or multiple piers, each qualifying as a fixed structure. In some scenarios, the marine vessel **1** might maneuver between fixed structures, for example one along the starboard side and another along the port side, effectively docking adjacent to multiple fixed structures simultaneously. This flexibility accommodates various docking configurations and vessel sizes.

The marine vessel **1** comprises at least one pressure sensor **110.** The primary purpose of the pressure sensor **110** is to monitor the engagement pressure between the marine vessel 1 and any fixed structures, such that assessments regarding physical engagement can be made.

The pressure sensor **110** can be realized as, or accommodated within, an anti-pinch strip, similar to a rub rail. This is a flexible member capable of detecting changes in pressure along its surface. Anti-pinch strips are commonly installed in marine vessels to prevent damage by absorbing impact and providing cushioning during docking or maneuvering. In the examples described herein, these strips are enhanced by employing one or more pressure sensors **110.** By embedding pressure sensors within an anti-pinch strip, or embodying the pressure sensor **110** as an anti-pinch strip, detection and measuring of force exerted along the surface of the strip can be accommodated.

A pressure sensor may be realized as an air or gas pressure sensor arranged in an internal gas or air filled volume of the anti-pinch strip, or as a linear transducer arranged to measure compression of the anti-pinch strip.

Other types of pressure sensors are also known, such as load cells.

The number of pressure sensors **110** embedded in each strip can vary from one to many based on several factors. For instance, the size of the strip may dictate the need for more pressure sensors **110** to cover a larger area comprehensively. The extension of the strip-how far it runs along the marine vessel's **1** hull-may also influence the sensor count, ensuring monitoring along its length. Additionally, the sensitivity required for specific docking scenarios might necessitate a higher density of sensors to provide accurate feedback on engagement pressure. For example, on a large vessel with extensive anti-pinch strips running along the starboard side, multiple pressure sensors **110** might be distributed evenly to monitor the entire length. This setup may ensure that any contact with a docking structure is detected precisely. The number and placement of pressure sensors **110** can thus be tailored to different vessel sizes and docking requirements.

In the example of **FIG. 1****,** the pressure sensor **110** is arranged around the marine vessel **1,** generally circumferentially, but it can be positioned along any portion of the outer periphery of the hull. In case fenders are used then these are normally deployed with even spacing along one or both sides of the vessel.

**FIG. 2A** shows another example arrangement, where the pressure sensor **110** extends longitudinally along an outer periphery **4** of the starboard side (which is an example portion **3-1)** of the hull **5** of the vessel **1.** The hull **5** is the body of the marine vessel **1,** and the outer periphery **4** refers to the external boundary or surface of the hull **5.** Alternative portions **3-2, 3-3** are indicated as potential arrangement locations, and yet additional may be realized by the skilled person, provided that the pressure sensor **110** appropriately can identify pressure engagement in response to a physical engagement detection. Hence, the portion **3** implies that the pressure sensor **110** does not need to cover the entire hull **5,** but can be arranged in areas most likely to come into contact with fixed structures.

The pressure sensor **110** is configured to collect force sensing data by detecting changes in pressure when the marine vessel **1** engages with a fixed structure. The force sensing data is herein referred to as engagement pressure, and can for example be quantified in terms of force per unit area (e.g., Newtons per square meter). When physical contact occurs, the pressure sensor **110** measures the amount of force exerted by the marine vessel **1** against the fixed structure. For example, if the marine vessel **1** docks and exerts a pressure of 500 Newtons over an area of 1 square meter, the engagement pressure would be 500 N/m².

Alternatively, or as a complement, one or more air-filled fenders can be deployed as the pressure sensor **110** along the sides of the vessel to protect the vessel during mooring. An example is shown in **FIG. 2B** with four fenders. Similar pressure sensors as in the anti-pinch strip can be used also in an air or gas filled fender. For example, consider a set of fenders equipped with integrated air pressure sensors, similar to a Tire Pressure Monitoring System (TPMS) used in vehicles. In this setup, each fender around the sides of the marine vessel **1** could function like a tire in a TPMS, constantly monitoring and reporting the air pressure levels within the fender. This configuration with a set of fenders equipped with integrated air pressure sensors could ensure that the engagement pressure is maintained at desired levels to protect both the vessel **1** and the fixed structure it is moored against. Just as a TPMS provides real-time information on tire pressure to enhance vehicle safety and performance, the integrated sensors within the fenders offer data to manage and adjust the engagement pressure.

Returning to **FIG. 1****,** the marine vessel **1** further comprises environment sensors configured to obtain environment data. These environment sensors include one or both of a positioning sensor **120** and a distance sensor **130.**

The positioning sensor **120** may be a GPS receiver, GNSS receiver, GLONASS receiver, or an inertial navigation system including one or more accelerometers, gyroscopes, and magnetometers. The positioning sensor **120** obtains positioning data, often expressed in absolute terms. The positioning data includes information such as latitude and longitude, heading, speed, and sometimes altitude, offering a global reference. For example, it might indicate that the marine vessel **1** is located at 35.6895° N, 139.6917° E, heading north at a speed of 10 knots.

The distance sensor **130** may be a sonar device, lidar device, radar device, camera device, ultrasonic device, or laser rangefinder device. The distance sensor **130** obtains positioning data, often expressed in relative terms, i.e., relative distance between the marine vessel **1** and nearby objects or structures. For example, it might indicate that the marine vessel **1** is located 15 meters away from a fixed structure, with an angle of approach at 30 degrees relative to the structure's surface.

The marine vessel **1** further comprises an environment chart **140.** The environment chart **140** is a mapping tool that provides information about the surrounding area, including waterways, depths, fixed structures, and navigational markers. The environment chart **140** integrates data from various sources to offer a visual representation of the environment. The environment chart **140** assists the crew in understanding the spatial layout and potential obstacles, ensuring informed decision-making during navigation and docking.

The marine vessel **1** also comprises a data storage unit **150.** The data storage unit 150 is responsible for storing information collected from various onboard sensors and systems, or from external services. The data storage unit **150** retains data such as vessel property data, positioning data, distance measurements, navigation routes, (historical) environmental conditions, and the like. The data storage unit **150** can enable the retrieval and analysis of past voyages, which supports decision-making and operational efficiency. Additionally, the data storage unit **150** provides a backup of information, ensuring that data is preserved for future reference and compliance with regulatory requirements.

The marine vessel **1** further includes a contact indicator **160.** This component is designed to emit an alert cue **90** in response to force sensing data obtained from the pressure sensor **110.** The contact indicator provides immediate feedback to the crew, signaling that the vessel **1** is in physical engagement with a structure. The alert cue can take various forms, including visual cues like flashing lights or display notifications, auditory cues such as alarms or spoken alerts, and haptic cues that involve vibrations or tactile feedback. These diverse alert methods ensure that the crew is promptly informed of contact.

The contact indicator 160 can also convey varying levels of urgency based on the engagement pressure detected by the pressure sensor **110.** For instance, as the engagement pressure increases, the alert system can escalate the intensity of its cues to signal the need for action. An example of this escalation includes a visual cue system where lights transition from green to yellow to red as engagement pressure intensifies, indicating normal, medium, and high levels, respectively. In terms of auditory alerts, an auditory cue system might start with a low beep for moderate engagement pressure and progress to a loud alarm as pressure increases. For haptic feedback, a joystick or control panel can provide light vibrations for lower pressures and stronger, more frequent vibrations as pressure becomes more critical. These graduated alerts help the crew quickly assess the situation and respond appropriately to maintain safe docking conditions.

The contact indicator **160** can be customized by the user to modify alert settings based on personal preferences or specific docking requirements. For instance, a user might configure the auditory alerts to signal safety by starting with a high-pitched alarm when the engagement pressure is insufficient and gradually reducing to silence as the pressure reaches a safe level associated an engagement pressure sufficient for ensuring that the vessel is held firmly in position relative to the fixed structure, i.e., the vessel is securely pressed up against the fixed structure. This configuration allows the crew to receive intuitive feedback that it's secure to leave or enter the vessel 1. Similarly, visual cues could be set to transition from red, indicating insufficient pressure, to green when the desired engagement pressure is achieved. This user-modifiable system provides flexibility, enabling adjustments according to different operational contexts or safety protocols.

The marine vessel **1** further includes a propulsion system **170,** which is adapted to propel the marine vessel 1 based on control signals. The propulsion system **170** may comprise various components such as drive units, motors, engines, thrusters, water jets, etc.

The marine vessel **1** further comprises a computer system **100** having processing circuitry **102.** The computer system **100** serves as the central processing unit for integrating and analyzing data from various sensors and services, and control components or systems. The processing circuitry **102** is thus in operative communication with the components **110, 120, 130, 140, 150, 160, 170** discussed above. The processing circuitry **102** includes processors, memory, and communication interfaces to execute algorithms and software applications that support the process of performing assisted docking of the marine vessel **1** according to methods discussed herein.

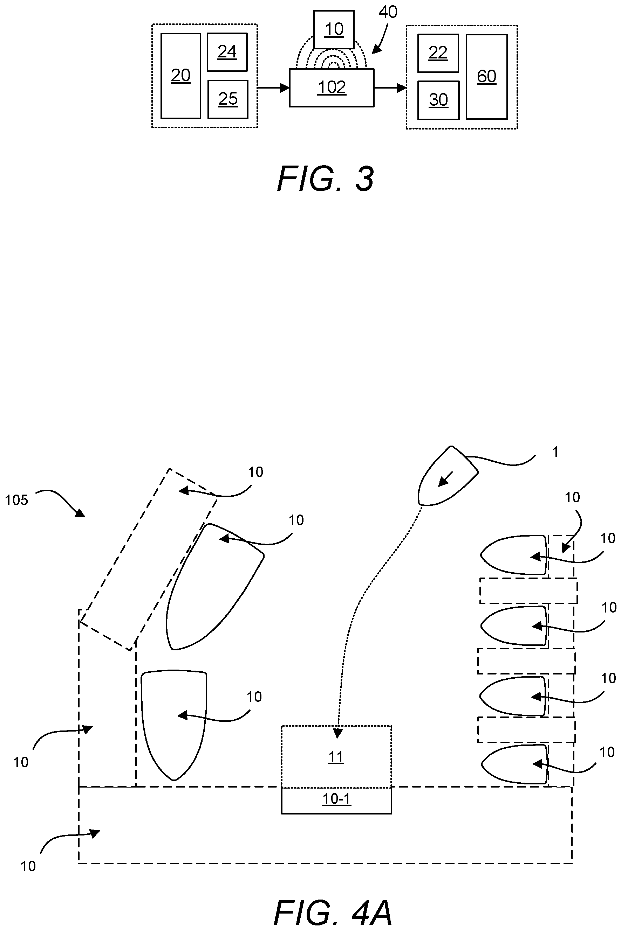

**FIG. 3** shows what data the processing circuitry **102** is configured to obtain, and how the processing circuitry **102,** based on processing the obtained data, is configured to perform certain control actions.

The processing circuitry **102** obtains environment data **20.** This could be obtained from either one or both of the environment sensors discussed above, i.e., the positioning sensor **120** and the distance sensor **130.** The environment data **20** indicates a position and an orientation of the marine vessel **1** in relation to a fixed structure **10.** Based on the environment data **20,** the processing circuitry **102** is configured to monitor a snap-in distance docking distance **40** in relation to the fixed structure **10,** i.e., to determine whether the vessel is close enough to a suitable docking location for automatically engaging the fixed structure or not.

The snap-in docking distance **40** is normally a predetermined range monitored for purposes of managing the approach of the marine vessel **1** to the fixed structure **10.** More specifically, the snap-in docking distance **40** is defined to determine the point at which the marine vessel **1** transitions from general docking behaviour navigation to a more controlled docking procedure targeting a deliberate physical engagement with a fixed structure. The snap-in distance may be a Euclidean distance measured from a point on the vessel, such as the center of buoyancy of the vessel or the point on the vessel closest to the fixed structure to some point on the fixed structure, such as the point on the structure closest to the vessel. Alternatively, the snap-in distance may be defined as a region defined by a perimeter extending at a given distance from the fixed structure. A vessel that breaches the perimeter is within the snap-in distance while a vessel that is wholly outside of the region is not within the snap-in distance from the fixed structure.

In this context, "snap-in" refers to the automatic initiation of a docking maneuver when the marine vessel **1** enters this specific range, i.e., where the marine vessel **1** is "snapped in" towards the fixed structure **10** from a position distanced from the fixed structure. The snap-in docking distance **40** could alternatively be referred to as an engagement threshold distance. Unlike a buffer distance, which maintains a safety margin to prevent contact, the snap-in docking distance **40** is designed to enable controlled engagement with the fixed structure **10.** The snap-in docking distance gives rise to two distinct types of docking behaviors, herein referred to as a first docking control behaviour and a second docking control behaviour.

In the first docking control behaviour, occurring when the marine vessel **1** is outside the snap-in docking distance **40,** it operates under normal navigation and assisted docking functionalities. This means the processing circuitry **102** controls the movement **22** of the marine vessel **1** based on one or more of (i) at least one maneuvering request **24** received from a user operating the marine vessel **1,** and (ii) the environment data **20.** The purpose of the first docking control behaviour is to maintain a safe distance from the fixed structure **10** without initiating docking procedures. In other words, in the first docking control behaviour the marine vessel **1** is controlled to not engage in any docking.

The maneuvering request **24** refers to inputs that control the movement of the marine vessel **1,** encompassing throttle and/or steering requests. This control originates from direct user inputs, for example provided via a steering device such as a joystick, lever, tiller, or the like. The throttle request includes a speed value. The processing circuitry **102** may adjust the power output of the propulsion system **170** based on this speed value. The steering request includes a directional value. The processing circuitry **102** may alter a steering mechanism, such as rudders or a bow thruster, based on this directional value. In the first docking control behaviour, control may be based on the user's inputted maneuvering request **24** and/or automatically based on the environment data **20.**

In the second docking control behavior, occurring when the marine vessel **1** is within the snap-in docking distance **40,** the processing circuitry **102** transitions to automatic control to facilitate docking. Here, the processing circuitry **102** automatically maneuvers the marine vessel **1** into physical engagement with the fixed structure **10.** This involves obtaining force sensing data **25** from the pressure sensor **110,** which indicates the engagement pressure between the marine vessel **1** and the fixed structure **10** after engagement between the vessel and the fixed structure **10.** Based on this data, the processing circuitry **102** dynamically regulates a thrust force **60** to maintain a desired engagement pressure against the fixed structure **10,** ensuring a stable and secure docking. The purpose of the second docking behavior is to precisely manage the physical contact between the marine vessel 1 and the fixed structure **10** for safe and efficient docking operations. During the second docking behavior, engagement force between the vessel and the fixed structure is regulated so as to lie in a desired range of engagement pressures, or close to a target pressure. This desired range of engagement pressures, and/or the target engagement pressure, may be determined from straight forward experimentation with a given vessel type, or from computer simulation.

Methods for automatically maneuvering a vessel in a given direction at a given speed are known in the art and will therefore not be discussed in more detail herein.

The snap-in docking distance **40** is a length that triggers the transition from the first docking control behaviour to the second docking control behaviour, when the marine vessel **1** approaches the fixed structure **10.** This length can vary based on several factors, including vessel property data of the marine vessel **1,** classification data of the fixed structure **10,** and environmental data such as wind speed and sea current strength. Typically, the snap-in docking distance **40** might range from about a meter to several meters, depending on the maneuverability and speed of the marine vessel **1.** The snap-in docking distance **40** is set longer than the distance required to safely board or disembark the marine vessel **1** without falling into the water or needing external assistance, yet close enough to initiate the docking procedure effectively.

The snap-in docking distance **40** may be measured as a straight line from the fixed structure **10** to the vessel marine vessel **10,** accounting for any angle of approach. This means the marine vessel **1** can approach the fixed structure **10** from various directions, and the processing circuitry **102** will still monitor and recognize the distance accurately. For example, a yacht may have a snap-in distance of two meters, allowing it to begin docking procedures smoothly as it nears for example a marina slip.

In some examples, the snap-in docking distance **40** is a user-configurable value. This allows for flexibility and customization based on specific docking scenarios or user preferences. Users may adjust this value, for example, through a control interface of the marine vessel **1,** via a mobile app, or through a remote service. For instance, in a crowded marina with limited space, a user might set a shorter snap-in docking distance **40** to ensure more precise control and prevent premature docking engagement. Conversely, in open waters with fewer obstacles, a longer snap-in distance could be chosen to allow for a smoother transition into docking mode.

In some examples, the snap-in docking distance **40** may be a fixed predetermined value. This may be set automatically by the processing circuitry **102** based on variety of factors. The fixed predetermined value may be set based on average docking scenarios, e.g., based on historical docking data. For example, the same distance may be applicable in harbours most frequently visited. This approach is advantageous in standard docking environments where conditions are relatively stable and predictable. Another factor that could determine the fixed predetermined value include vessel property data, e.g., size or type of marine vessel **1,** ensuring compatibility across a fleet of vessels. Yet another example could involve industry-standard settings for specific docking facilities, where the fixed distance aligns with infrastructure specifications.

In some examples, the engagement pressure against the fixed structure **10** may be based upon a user request. This request can be obtained by the processing circuitry **102** via similar methods as the user-configurable snap-in docking distance value. The engagement pressure request specifies the desired level of pressure that the marine vessel **1** should maintain against the fixed structure **10** during docking. By allowing users to set their preferred engagement pressure, the processing circuitry **102** provides greater control over the docking process, accommodating various preferences or situational needs.

The user can select the engagement pressure via the request be based on factors such as vessel property conditions, docking conditions, or personal comfort with the docking maneuver. For example, in calm weather, a lower engagement pressure might suffice, while in rough conditions, a higher pressure might be necessary to ensure stability.

Alternatively, if a senior individual or a movement-impaired individual is about to embark or disembark to/from the marine vessel **1,** a higher engagement pressure can be manually selected to promote stability and reduce the distance between vessel and the fixed structure.

Some fixed structures may be associated with less rigid materials. In this case the configured target engagement pressure can be lowered to accommodate for this such that the fixed structure is not damaged.

Alternatively, the processing circuitry **102** might obtain preset profiles for different docking scenarios from the data storage unit **150,** such as a "gentle docking profile", a "standard docking profile" or a "resolute docking profile".

Alternatively, the processing circuitry **102** might provide feedback on the current engagement pressure, for example through the contact indicator **160,** allowing users to make informed adjustments as needed throughout the thrust regulation, further enhancing the docking experience.

Once the pressure engagement request is received, the processing circuitry **102** regulates the thrust force **60** accordingly by dynamically adjusting the power and direction of the propulsion system **170,** possibly involving also auxiliary propulsion devices such as bow thrusters, and also the steering, to achieve and maintain the specified engagement pressure. This real-time regulation ensures that the vessel docks securely without exerting excessive or insufficient force on the structure.

Consider the example discussed above where the marine vessel 1 docks and exerts a pressure of 500 N/m². The thrust force **60** can be regulated to maintain or adjust this pressure as needed. Initially, the thrust might be increased rapidly to ensure secure contact, then gradually decreased as the vessel settles into position, preventing any abrupt movements. Conversely, if the pressure becomes too high, the thrust can be decreased quickly at first to alleviate stress on the fixed structure **10,** then adjusted more slowly as the vessel **1** stabilizes. This non-linear adjustment may allow for a safer and more precise control.

An example scenario will now be explained with further reference to **FIGs. 4A-E.** These illustrations show a marine vessel **1** located in a docking area **105.** The docking area 105 includes a plurality of fixed structures **10.**

In **FIG. 4A****,** the marine vessel **1** is shown navigating toward an unoccupied docking location **11** near one of the fixed structures **10,** namely the fixed structure **10-1.** The processing circuitry **102** may undergo a calculation process in order to find this docking location **11.**

A first step of this calculation process involves obtaining spatial surroundings data pertaining to the docking area **105.** The spatial surroundings data characterizes the detailed information about the environment surrounding the marine vessel **1.** This data can be obtained from various sources, such as the positioning sensor **120,** the distance sensor **130** and/or the environment chart **140.**

The spatial surroundings data is processed by the processing circuitry **12** identify unoccupied docking locations, for example using various algorithms and techniques. This involves analyzing the spatial surroundings data to determine available space and find docking opportunities. A concrete example of this process could involve using a path planning algorithm, such as the A* algorithm, which is commonly used in navigation to find the most efficient route to a target location. This algorithm evaluates potential paths based on factors such as distance, obstacles, and available space, ensuring the marine vessel 1 can find and navigate to a docking location. Algorithms like occupancy grid mapping could also be used to create a dynamic map of the docking area, highlighting occupied and unoccupied spaces.

Once the spatial surroundings data is processed and an unoccupied docking location **11** is identified, the processing circuitry **102** selects the fixed structure **10-1** adjacent to this location **11** for docking. This selection is based on, for example, the suitability and accessibility of the location **11,** ensuring that the marine vessel **1** can safely and efficiently maneuver into position.

The suitability of the fixed structure **10-1** may in some cases also be based on a suitability index relating to how rigid the fixed structure **10-1** in relation to an expected pressure influence expected to be caused in response to the physical engagement between the marine vessel 1 and the fixed structure **10-1.** The processing circuitry **102** may achieve this by obtaining classification data of the fixed structure, which includes information about, for example, its type, size, material, and structural integrity. The classification data helps categorize the structure-whether it's a concrete quay, a wooden pier, or another type of fixed structure **10.**

The classification data may be obtained using different methods. In a first example, it may be directly received from the data storage unit **150,** where pre-existing data about various fixed structures is stored. This data includes classifications based on factors such as material, size, and type of structure (e.g., concrete pier, wooden dock). Alternatively, classification can be calculated based on image data collected from the distance sensor **130.** These sensors capture visual and spatial information about the structure, which is then analyzed to determine its characteristics. Image processing algorithms can identify features such as shape, texture, and dimensions, allowing the system to classify the structure accurately, for example by recognizing the appearance of a typical wooden bridge. This dynamic can enable real-time classification even when docking at unfamiliar locations.

Simultaneously, the processing circuitry **102** obtains vessel property data, which encompasses details pertaining to the marine vessel **1,** such size, weight, hull material, and propulsion capabilities. By comparing the vessel property data of the marine vessel **1** with the classification data of the fixed structure **10,** the processing circuitry **102** calculates a suitability index. This index represents how well-suited the marine vessel **1** is for docking at the particular fixed structure **10,** considering factors like stability, risk of damage, and docking conditions.

Once the suitability index is determined, the processing circuitry **102** uses it to regulate the thrust force **60** during docking. For example, if the suitability index is relatively low, indicating potential challenges or risks in docking-such as structural fragility or significant size differences-the processing circuitry **102** reduces the thrust force **60.** This cautious approach reduces the risk of damage to both the marine vessel **1** and the fixed structure **10,** ensuring a gentle docking process. Conversely, if the suitability index is high, reflecting favorable conditions and compatibility-such as a robust fixed structure **10** well-suited to the marine vessel **1**-the processing circuitry **102** increases the thrust force **60.** This allows for a more assertive docking maneuver, improving efficiency and stability by ensuring secure engagement with the structure. By dynamically adjusting the thrust force **60** in this manner, the processing circuitry **102** may ensure that docking operations are both safe and effective, tailored to the specific conditions and characteristics of each docking scenario. This approach may enhance the ability to dock smoothly across a range of environments and structural types.

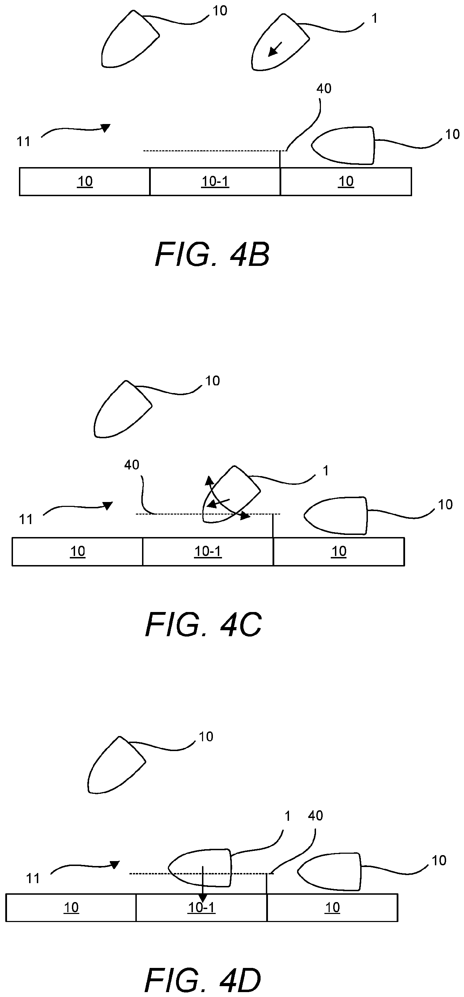

In **FIG. 4B****,** the marine vessel **1** is shown outside the snap-in docking distance **40,** approaching a series of fixed structures **10,** including the fixed structure **10-1** selected for docking. Since the snap-in docking distance **40** is not breached yet, the marine vessel **1** will operate in accordance with the first docking control behaviour discussed above.

In **FIG. 4C****,** the marine vessel **1** has breached the snap-in docking distance **40,** initiating a transition to the second docking control behavior. As the marine vessel **1** crosses this threshold, the processing circuitry **102** automatically engages docking procedures aimed at guiding the marine vessel **1** into physical contact with the fixed structure **10-1.**

A default example may involve applying the thrust force **60** towards the fixed structure **10** whenever the snap-in docking distance **40** is breached. In other more sophisticated examples, this procedure may be complemented by an alignment procedure. This is indicated in **FIG. 4C** with the arrow in the directions towards the starboard-side and the port-side from the bow of the marine vessel **1.** Here, the processing circuitry **102** obtains contour data of the fixed structure **10-1.** This may be obtained from the distance sensor **130** or the environment chart **140.** The contour data provides an outline of the shape and dimensions of the fixed structure **10-1,** enabling the processing circuitry **102** to understand its spatial characteristics.

With the contour data available, the processing circuitry **102** regulates the thrust force **60** by automatically aligning the marine vessel **1** relative to the shape of the fixed structure **10-1.** This involves adjusting the position and orientation of the marine vessel 1 to match the contour, ensuring a desired fit and secure engagement. By automating alignment, the processing circuitry **102** may enhance docking efficiency and reduce the risk of damage. Moreover, the alignment procedure can allow the marine vessel **1** to adjust its approach dynamically, adapting to the specific contours of the docking structure for a smooth and safe docking experience.

Like the engagement pressure request, a desired alignment may also be conditioned by a user request, i.e., a user alignment request. This request allows the user to specify a desired alignment of the marine vessel **1** relative to the contour data of the fixed structure **10-1.** The contour may be graphically visualized in a vessel interface so that the user can view the shape intuitively, which may be useful in rough weather conditions and/or during nighttime docking. For instance, a user might request alignment for a specific loading access, e.g., at the bow or at the stem, to accommodate unique structural features of the fixed structure **10-1** and/or marine vessel **1.** It could also be the case that unloading or loading is only possible from a certain portion **3** of the hull **5.**

Once the alignment request is received, the processing circuitry **102** controls the automatic alignment of the marine vessel **1** based on this input. The processing circuitry **102** uses the contour data of the fixed structure **10-1** to guide the marine vessel **1** into the desired position, adjusting thrust and steering to achieve precise alignment. This capability may provide flexibility and enhances user control during docking, according to specific needs, while maintaining the system's automatic precision and safety features.

In situations where the alignment procedure is carried out, the snap-in docking distance **40** may be set such that the marine vessel 1 has ample space to adjust its speed and alignment before engaging with the fixed structure **10.** This may be complemented by temporarily controlling the thrust force **60** in a direction away from the fixed structure **10** to facilitate alignment. Once aligned, the thrust force **60** can then be adjusted to guide the vessel towards the fixed structure **10.**

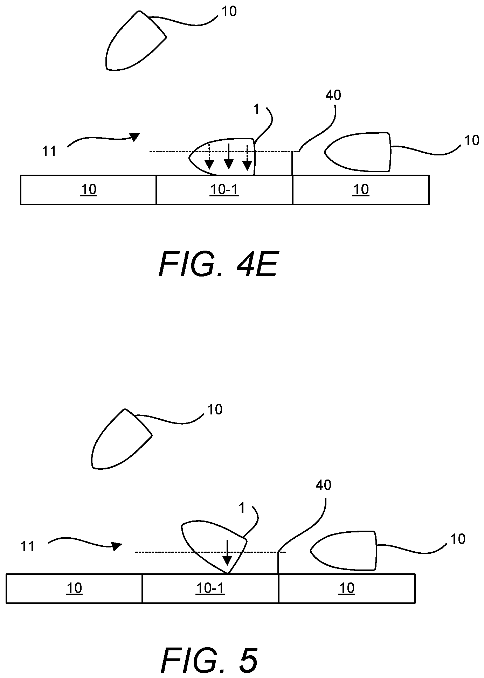

**FIG. 4D** and **FIG. 4E** show a continuation of the process from **FIG. 4C** where the marine vessel **1** is controlled to come into engagement with the fixed structure **10-1.** As indicated in these images, this may involve the control of a single drive unit, or multiple, to achieve the desired engagement. In **FIG. 4D****,** a centralized thrust is provided, while in **FIG. 4E****,** three separate thrusts are regulated for the bow portion, middle portion, and stern portion, respectively, of the marine vessel **1.**

The above is also shown in **FIG. 5** with a slight variation. Here, a stern thrust is controlled, which could be useful to provide the desired alignment between the marine vessel **1** and the fixed structure **10-1** at the stern-side. Of course, the same could be realized for bow-side engagement.

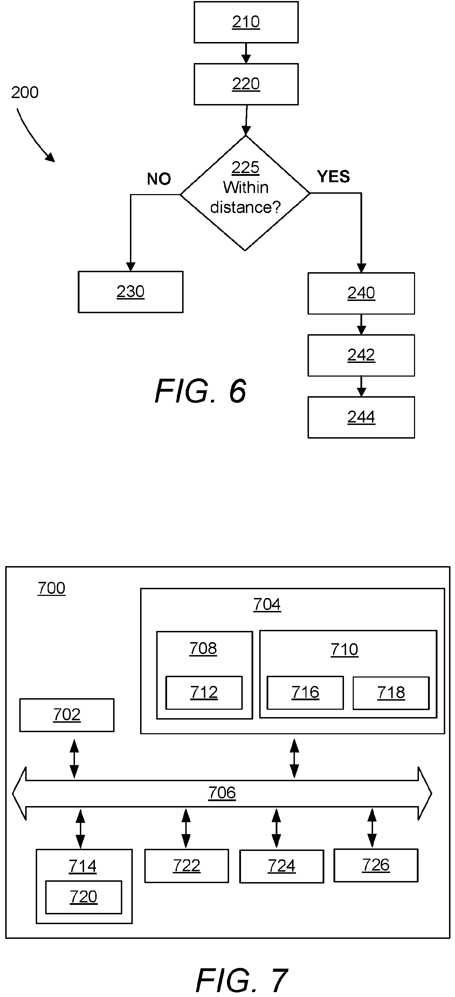

**FIG. 6** shows a computer-implemented method **200** for assisted docking of a marine vessel **1.** The steps of the method **200** are carried out by processing circuitry **102** of a computer system **100.** The method **200** comprises a step **210** of obtaining environment data **20** of the marine vessel **1** in relation to at least one fixed structure **10.** The method **200** further comprises a step **210** of monitoring a snap-in docking distance **40** in relation to said at least one fixed structure **10** based on the environment data **20.** The next step **225** is a conditional statement, where different actions are carried out depending on whether the marine vessel **1** is within the snap-in docking distance **40** or not. If the method **200** proceeds to step **230,** the marine vessel **1** is outside the monitored snap-in docking distance **40.** The step **230** involves controlling movement **22** of the marine vessel **1** based on one or more of (i) at least one maneuvering request **24** received from a user operating the marine vessel **1,** and (ii) the environment data **20.** If the method **200** proceeds to step **240,** the marine vessel **1** is within the monitored snap-in docking distance **40.** The step **240** involves controlling the marine vessel **1** to move into physical engagement with said at least one fixed structure **10.** The method **200** further comprises a step **242** of obtaining force sensing data **25** from a pressure sensor **110** in response to said physical engagement. The force sensing data **25** indicates an engagement pressure between the marine vessel **1** and said at least one fixed structure **10.** The method **200** further comprises a step **244** of regulating a thrust force **60** in a direction towards said at least one fixed structure **10** based on said force sensing data **25** to control a desired engagement pressure of the marine vessel **1** against said at least one fixed structure **10.**

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In further examples of this disclosure the following is provided.

Example 1: A computer system (100; 700) for assisted docking of a marine vessel (1), the computer system (100; 700) comprising processing circuitry (102; 702) configured to obtain environment data (20) of the marine vessel (1) in relation to at least one fixed structure (10); monitor a snap-in docking distance (40) in relation to said at least one fixed structure (10) based on the environment data (20); in response to the marine vessel (1) being outside the monitored snap-in docking distance (40): control movement (22) of the marine vessel (1) based on one or more of (i) at least one maneuvering request (24) received from a user operating the marine vessel (1), and (ii) the environment data (20); and in response to the marine vessel (1) being within the monitored snap-in docking distance (40): automatically control the marine vessel (1) to move into physical engagement with said at least one fixed structure (10), obtain force sensing data (25) from a pressure sensor (110) in response to said physical engagement, the force sensing data (25) indicating an engagement pressure between the marine vessel (1) and said at least one fixed structure (10), and regulate a thrust force (60) in a direction towards said at least one fixed structure (10) based on said force sensing data (25) to control a desired engagement pressure of the marine vessel (1) against said at least one fixed structure (10).

Example 2: The computer system (100; 700) of Example 1, wherein the processing circuitry (102; 702) is further configured to obtain contour data of said at least one fixed structure (10), and the processing circuitry (102; 702) is configured to regulate the thrust force (60) by controlling an automatic alignment of the marine vessel (1) in relation to said contour data of said at least one fixed structure (10).

Example 3: The computer system (100; 700) of Example 2, wherein the contour data is obtained from one or more of a distance sensor (130) and an environment chart (140).

Example 4: The computer system (100; 700) of any of Examples 2-3, wherein the processing circuitry (102; 702) is further configured to obtain an alignment request from a user, the alignment request indicating a desired alignment of the marine vessel (1) in relation to the contour data of said at least one fixed structure (10); and control the automatic alignment based on the alignment request.

Example 5: The computer system (100; 700) of any preceding Example, wherein the snap-in docking distance (40) is a user-configurable value.

Example 6: The computer system (100; 700) of any preceding Example, wherein the snap-in docking distance (40) is a fixed predetermined value.

Example 7: The computer system (100; 700) of any preceding Example, wherein the processing circuitry (102; 702) is further configured to obtain spatial surroundings data pertaining to a docking area (105) where the marine vessel (1) is located, the docking area (105) involving said at least one fixed structure (10); process the spatial surroundings data to identify at least one unoccupied docking location (11) adjacent said at least one fixed structure (10); and select said at least one fixed structure (10) for docking based on the unoccupied docking location (11).

Example 8: The computer system (100; 700) of any preceding Example, wherein the processing circuitry (102; 702) is further configured to obtain classification data of said at least one fixed structure (10); obtain vessel property data of the marine vessel (1); determine a suitability index for the marine vessel (1) to dock by comparing the vessel property data and the classification data; and control the regulation of the thrust force (60) based on said suitability index.

Example 9: The computer system (100; 700) of Example 8, wherein controlling the regulation of the thrust force (60) based on said suitability index comprises reducing the thrust force for relatively lower suitability indexes, and increasing the thrust force for relatively greater suitability indexes.

Example 10: The computer system (100; 700) of any preceding Example, wherein the processing circuitry (102; 702) is further configured to obtain an engagement pressure request from a user, the engagement pressure request indicating a desired engagement pressure for the marine vessel (1) against said at least one fixed structure (10); and regulate the thrust force (60) based on the engagement pressure request.

Example 11: The computer system (100; 700) of any preceding Example, wherein the processing circuitry (102; 702) is further configured to cause control of a contact indicator (160) to emit an alert cue in response to said force sensing data (25) being obtained from the pressure sensor (110).

Example 12: The computer system (100; 700) of Example 11, wherein the alert cue is one or more of a visual cue, an auditory cue, or a haptic cue.

Example 13: The computer system (100; 700) of any preceding Example, wherein the at least one maneuvering request (24) involves one or more of a throttle request and a steering request.

Example 14: A marine vessel (1), comprising the computer system (100; 700) of any preceding Example; a propulsion system (170) adapted to propel the marine vessel (1) based on control signals from said computer system (100; 700); and a pressure sensor (110) configured to obtain force sensing data (25), wherein the pressure sensor (110) is arranged along at least a portion (3) of an outer periphery (4) of a hull (5) of the marine vessel (1).

Example 15: The marine vessel (1) of Example 14, wherein the pressure sensor (110) is an anti-pinch strip.

Example 16: The marine vessel (1) of Example 15, wherein the anti-pinch strip is arranged circumferentially around said at least a portion (3) of the hull (5).

Example 17: The marine vessel (1) of any of Examples 14-16, further comprising one or more of a positioning sensor (120) and a distance sensor (130) configured to obtain environment data (20).

Example 18: A computer-implemented method (200) for assisted docking of a marine vessel (1), the method (200) comprising: obtaining (210), by processing circuitry (102; 702) of a computer system (100; 700), environment data (20) of the marine vessel (1) in relation to at least one fixed structure (10); monitoring (220), by the processing circuitry (102; 702), a snap-in docking distance (40) in relation to said at least one fixed structure (10) based on the environment data (20); in response to the marine vessel (1) being outside the monitored snap-in docking distance (40): controlling (230), by the processing circuitry (102; 702), movement (22) of the marine vessel (1) based on one or more of (i) at least one maneuvering request (24) received from a user operating the marine vessel (1), and (ii) the environment data (20); and in response to the marine vessel (1) being within the monitored snap-in docking distance (40): controlling (240), by the processing circuitry (102; 702), the marine vessel (1) to move into physical engagement with said at least one fixed structure (10), obtaining (242), by the processing circuitry (102; 702), force sensing data (25) from a pressure sensor (110) in response to said physical engagement, the force sensing data (25) indicating an engagement pressure between the marine vessel (1) and said at least one fixed structure (10), and regulating (244), by the processing circuitry (102; 702), a thrust force (60) in a direction towards said at least one fixed structure (10) based on said force sensing data (25) to control a desired engagement pressure of the marine vessel (1) against said at least one fixed structure (10).

Example 19: A computer program product comprising program code for performing, when executed by the processing circuitry (102; 702), the method (200) of Example 18.

Example 20: A non-transitory computer-readable storage medium comprising instructions, which when executed by the processing circuitry (102; 702), cause the processing circuitry (102; 702) to perform the method (200) of Example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 700) for assisted docking of a marine vessel (1), the computer system (100; 700) comprising processing circuitry (102; 702) configured to:
obtain environment data (20) of the marine vessel (1) in relation to at least one fixed structure (10);
monitor a snap-in docking distance (40) in relation to said at least one fixed structure (10) based on the environment data (20);
in response to the marine vessel (1) being outside the monitored snap-in docking distance (40):
- control movement (22) of the marine vessel (1) based on one or more of (i) at least one maneuvering request (24) received from a user operating the marine vessel (1), and (ii) the environment data (20); and
in response to the marine vessel (1) being within the monitored snap-in docking distance (40):
- automatically control the marine vessel (1) to move into physical engagement with said at least one fixed structure (10),
- obtain force sensing data (25) from a pressure sensor (110) in response to said physical engagement, the force sensing data (25) indicating an engagement pressure between the marine vessel (1) and said at least one fixed structure (10), and
- regulate a thrust force (60) in a direction towards said at least one fixed structure (10) based on said force sensing data (25) to control a desired engagement pressure of the marine vessel (1) against said at least one fixed structure (10).

2. The computer system (100; 700) of claim 1, wherein:
the processing circuitry (102; 702) is further configured to obtain contour data of said at least one fixed structure (10), and
the processing circuitry (102; 702) is configured to regulate the thrust force (60) by controlling an automatic alignment of the marine vessel (1) in relation to said contour data of said at least one fixed structure (10).

3. The computer system (100; 700) of claim 2, wherein the contour data is obtained from one or more of a distance sensor (130) and an environment chart (140).

4. The computer system (100; 700) of any of claims 2-3, wherein the processing circuitry (102; 702) is further configured to:
obtain an alignment request from a user, the alignment request indicating a desired alignment of the marine vessel (1) in relation to the contour data of said at least one fixed structure (10); and
control the automatic alignment based on the alignment request.

5. The computer system (100; 700) of any preceding claim, wherein the snap-in docking distance (40) is a user-configurable value or a fixed predetermined value.

6. The computer system (100; 700) of any preceding claim, wherein the processing circuitry (102; 702) is further configured to:
obtain spatial surroundings data pertaining to a docking area (105) where the marine vessel (1) is located, the docking area (105) involving said at least one fixed structure (10);
process the spatial surroundings data to identify at least one unoccupied docking location (11) adjacent said at least one fixed structure (10); and
select said at least one fixed structure (10) for docking based on the unoccupied docking location (11).

7. The computer system (100; 700) of any preceding claim, wherein the processing circuitry (102; 702) is further configured to:
obtain classification data of said at least one fixed structure (10);
obtain vessel property data of the marine vessel (1);
determine a suitability index for the marine vessel (1) to dock by comparing the vessel property data and the classification data; and
control the regulation of the thrust force (60) based on said suitability index,
wherein controlling the regulation of the thrust force (60) based on said suitability index comprises:
- reducing the thrust force for relatively lower suitability indexes, and
- increasing the thrust force for relatively greater suitability indexes.

8. The computer system (100; 700) of any preceding claim, wherein the processing circuitry (102; 702) is further configured to:
obtain an engagement pressure request from a user, the engagement pressure request indicating a desired engagement pressure for the marine vessel (1) against said at least one fixed structure (10); and
regulate the thrust force (60) based on the engagement pressure request.

9. The computer system (100; 700) of any preceding claim, wherein the processing circuitry (102; 702) is further configured to cause control of a contact indicator (160) to emit an alert cue in response to said force sensing data (25) being obtained from the pressure sensor (110).

10. A marine vessel (1), comprising:
the computer system (100; 700) of any preceding claim;
a propulsion system (170) adapted to propel the marine vessel (1) based on control signals from said computer system (100; 700); and
a pressure sensor (110) configured to obtain force sensing data (25), wherein the pressure sensor (110) is arranged along at least a portion (3) of an outer periphery (4) of a hull (5) of the marine vessel (1).

11. The marine vessel (1) of claim 10, wherein the pressure sensor (110) is an anti-pinch strip.

12. The marine vessel (1) of claim 11, wherein the anti-pinch strip is arranged circumferentially around said at least a portion (3) of the hull (5).

13. A computer-implemented method (200) for assisted docking of a marine vessel (1), the method (200) comprising:
obtaining (210), by processing circuitry (102; 702) of a computer system (100; 700), environment data (20) of the marine vessel (1) in relation to at least one fixed structure (10);
monitoring (220), by the processing circuitry (102; 702), a snap-in docking distance (40) in relation to said at least one fixed structure (10) based on the environment data (20);
in response to the marine vessel (1) being outside the monitored snap-in docking distance (40):
- controlling (230), by the processing circuitry (102; 702), movement (22) of the marine vessel (1) based on one or more of (i) at least one maneuvering request (24) received from a user operating the marine vessel (1), and (ii) the environment data (20); and
in response to the marine vessel (1) being within the monitored snap-in docking distance (40):
- controlling (240), by the processing circuitry (102; 702), the marine vessel (1) to move into physical engagement with said at least one fixed structure (10),
- obtaining (242), by the processing circuitry (102; 702), force sensing data (25) from a pressure sensor (110) in response to said physical engagement, the force sensing data (25) indicating an engagement pressure between the marine vessel (1) and said at least one fixed structure (10), and
- regulating (244), by the processing circuitry (102; 702), a thrust force (60) in a direction towards said at least one fixed structure (10) based on said force sensing data (25) to control a desired engagement pressure of the marine vessel (1) against said at least one fixed structure (10).

14. A computer program product comprising program code for performing, when executed by the processing circuitry (102; 702), the method (200) of claim 13.

15. A non-transitory computer-readable storage medium comprising instructions, which when executed by the processing circuitry (102; 702), cause the processing circuitry (102; 702) to perform the method (200) of claim 13.

## Amended claims

### Amended claims in accordance with Rule 137(2) EPC.

1. A computer system (100; 700) for assisted docking of a marine vessel (1), the computer system (100; 700) comprising processing circuitry (102; 702) configured to:
obtain environment data (20) of the marine vessel (1) in relation to at least one fixed structure (10);
monitor a snap-in docking distance (40) in relation to said at least one fixed structure (10) based on the environment data (20), wherein the snap-in docking distance (40) is defined to determine a point at which the marine vessel (1) transitions to a controlled docking procedure targeting a deliberate physical engagement with the at least one fixed structure (10);
in response to the marine vessel (1) being outside the monitored snap-in docking distance (40):
- control movement (22) of the marine vessel (1) based on one or more of (i) at least one maneuvering request (24) received from a user operating the marine vessel (1), and (ii) the environment data (20); and
in response to the marine vessel (1) being within the monitored snap-in docking distance (40):
- automatically control the marine vessel (1) to move into physical engagement with said at least one fixed structure (10),
- obtain force sensing data (25) from a pressure sensor (110) in response to said physical engagement, the force sensing data (25) indicating an engagement pressure between the marine vessel (1) and said at least one fixed structure (10), and
- regulate a thrust force (60) in a direction towards said at least one fixed structure (10) based on said force sensing data (25) to control a desired engagement pressure of the marine vessel (1) against said at least one fixed structure (10).

2. The computer system (100; 700) of claim 1, wherein:
the processing circuitry (102; 702) is further configured to obtain contour data of said at least one fixed structure (10), and
the processing circuitry (102; 702) is configured to regulate the thrust force (60) by controlling an automatic alignment of the marine vessel (1) in relation to said contour data of said at least one fixed structure (10).

3. The computer system (100; 700) of claim 2, wherein the contour data is obtained from one or more of a distance sensor (130) and an environment chart (140).

4. The computer system (100; 700) of any of claims 2-3, wherein the processing circuitry (102; 702) is further configured to:
obtain an alignment request from a user, the alignment request indicating a desired alignment of the marine vessel (1) in relation to the contour data of said at least one fixed structure (10); and
control the automatic alignment based on the alignment request.

5. The computer system (100; 700) of any preceding claim, wherein the snap-in docking distance (40) is a user-configurable value or a fixed predetermined value.

6. The computer system (100; 700) of any preceding claim, wherein the processing circuitry (102; 702) is further configured to:
obtain spatial surroundings data pertaining to a docking area (105) where the marine vessel (1) is located, the docking area (105) involving said at least one fixed structure (10);
process the spatial surroundings data to identify at least one unoccupied docking location (11) adjacent said at least one fixed structure (10); and
select said at least one fixed structure (10) for docking based on the unoccupied docking location (11).

7. The computer system (100; 700) of any preceding claim, wherein the processing circuitry (102; 702) is further configured to:
obtain classification data of said at least one fixed structure (10);
obtain vessel property data of the marine vessel (1);
determine a suitability index for the marine vessel (1) to dock by comparing the vessel property data and the classification data; and
control the regulation of the thrust force (60) based on said suitability index,
wherein controlling the regulation of the thrust force (60) based on said suitability index comprises:
- reducing the thrust force for relatively lower suitability indexes, and
- increasing the thrust force for relatively greater suitability indexes.

8. The computer system (100; 700) of any preceding claim, wherein the processing circuitry (102; 702) is further configured to:
obtain an engagement pressure request from a user, the engagement pressure request indicating a desired engagement pressure for the marine vessel (1) against said at least one fixed structure (10); and
regulate the thrust force (60) based on the engagement pressure request.

9. The computer system (100; 700) of any preceding claim, wherein the processing circuitry (102; 702) is further configured to cause control of a contact indicator (160) to emit an alert cue in response to said force sensing data (25) being obtained from the pressure sensor (110).

10. A marine vessel (1), comprising:
the computer system (100; 700) of any preceding claim;
a propulsion system (170) adapted to propel the marine vessel (1) based on control signals from said computer system (100; 700); and
a pressure sensor (110) configured to obtain force sensing data (25), wherein the pressure sensor (110) is arranged along at least a portion (3) of an outer periphery (4) of a hull (5) of the marine vessel (1).

11. The marine vessel (1) of claim 10, wherein the pressure sensor (110) is an anti-pinch strip.

12. The marine vessel (1) of claim 11, wherein the anti-pinch strip is arranged circumferentially around said at least a portion (3) of the hull (5).

13. A computer-implemented method (200) for assisted docking of a marine vessel (1), the method (200) comprising:
obtaining (210), by processing circuitry (102; 702) of a computer system (100; 700), environment data (20) of the marine vessel (1) in relation to at least one fixed structure (10);
monitoring (220), by the processing circuitry (102; 702), a snap-in docking distance (40) in relation to said at least one fixed structure (10) based on the environment data (20), wherein the snap-in docking distance (40) is defined to determine a point at which the marine vessel (1) transitions to a controlled docking procedure targeting a deliberate physical engagement with the at least one fixed structure (10);
in response to the marine vessel (1) being outside the monitored snap-in docking distance (40):
- controlling (230), by the processing circuitry (102; 702), movement (22) of the marine vessel (1) based on one or more of (i) at least one maneuvering request (24) received from a user operating the marine vessel (1), and (ii) the environment data (20); and
in response to the marine vessel (1) being within the monitored snap-in docking distance (40):
- controlling (240), by the processing circuitry (102; 702), the marine vessel (1) to move into physical engagement with said at least one fixed structure (10),
- obtaining (242), by the processing circuitry (102; 702), force sensing data (25) from a pressure sensor (110) in response to said physical engagement, the force sensing data (25) indicating an engagement pressure between the marine vessel (1) and said at least one fixed structure (10), and
- regulating (244), by the processing circuitry (102; 702), a thrust force (60) in a direction towards said at least one fixed structure (10) based on said force sensing data (25) to control a desired engagement pressure of the marine vessel (1) against said at least one fixed structure (10).

14. A computer program product comprising program code for performing, when executed by the processing circuitry (102; 702), the method (200) of claim 13.

15. A non-transitory computer-readable storage medium comprising instructions, which when executed by the processing circuitry (102; 702), cause the processing circuitry (102; 702) to perform the method (200) of claim 13.
